Europäisches Patentamt

European Patent Office

Office européen des brevets

(11) Publication number: **0 059 543**

**B1**

(12) **EUROPEAN PATENT SPECIFICATION**

(45) Date of publication of patent specification: **19.06.85**

(21) Application number: **82300675.4**

(22) Date of filing: **11.02.82**

(51) Int. Cl.⁴: **H 04 Q 11/04,** H 04 Q 5/00, H 04 M 1/72

(54) **Parallel operation of telephone equipment on a digital loop.**

(30) Priority: **27.02.81 CA 371926**

(43) Date of publication of application:
**08.09.82 Bulletin 82/36**

(45) Publication of the grant of the patent:
**19.06.85 Bulletin 85/25**

(84) Designated Contracting States:
**AT BE DE FR GB IT NL SE**

(56) References cited:
**EP-A-0 023 403**
**DE-B-2 917 570**

**ELECTRONIC DESIGN'S TELECOM DESIGN,
1980, pages 249-294, Melville (USA); B.
KARASCH et al.: "A solid state line card using
LSI components"**

(73) Proprietor: **NORTHERN TELECOM LIMITED**
**1600 Dorchester Boulevard West**
**Montreal Quebec H3H 1R1 (CA)**

(72) Inventor: **Retallack, Laurence James**
**676 Edison Avenue**
**Ottawa Ontario K2A 1W1 (CA)**
Inventor: **Reedyk, Cornelis Wilfred**
**36 Quinpool Crescent**
**Nepean Ontario K2H 6J1 (CA)**

(74) Representative: **Crawford, Andrew Birkby et al**
**A.A. THORNTON & CO. Northumberland House**
**303-306 High Holborn**
**London WC1V 7LE (GB)**

Courier Press, Leamington Spa, England.

# Description

The present invention relates generally to digital telephone station apparatus capable of being operated in parallel (e.g. extension telephones) and more particularly to digital telephone sets capable of being operated in parallel on a subscriber's digital loop.

In the North American telephone system it is common practice to allow two or more telephone sets to operate in parallel, as extensions, simultaneously on the same analogue telephone line. When analogue voice transmission is used on the telephone line (i.e. subscriber loop), the signals from the two or more extensions (i.e. telephone sets) are added linearly simply due to the fact that the two or more extensions are connected in parallel across the same telephone line.

When digital signals are employed in the subscriber loop, the installation of extension telephone sets is not as simple as it was with analogue signals. In digital telephony, the analogue (e.g. voice) signals are encoded in a non-linear fashion such as in the mu-law pulse code modulation (PCM). Consequently it is not possible to add the digital signals directly, as such practice results in distortion of the signals.

In the prior art, when digital transmission was employed and when two or more digital signals were to be combined, as in a conference circuit, the digital signals were routed to a common circuit (e.g. a conference circuit or conference bridge) usually provided as common equipment in a central office.

There are many such conference circuits described in the art. Three of these prior circuits are briefly described below.

U.S. patent 4,160,878 dated July 10, 1979 to P. Hirschmann and E. Hoefer describes a circuit in which digital signals of all subscribers are consecutively converted into analog signals and an analog summation signal is formed therefrom. This summation signal is again converted back into a digital signal (from the abstract of the patent).

U.S. patent 4,007,338 dated February 8, 1977 to D. W. McLaughlin describes a purely digital conferencing circuit that is based upon comparing the magnitude of the PCM digital samples. As stated at column 2, lines 30 to 44 of the patent "the operation is such that two words [for a three party conference] corresponding to two channels are read from the information memory every time slot, and after proper comparison, the largest sample is transmitted to the third channel. In other words, assuming, for example, that channels 3, 5 and 9 are engaged in a 3-way conference, during the channel 3 time slot, the samples from channel 5 and channel 9 are read and compared, and the larger of the two samples is transmitted to channel 3. Subsequently, during the channel 5 time slot, the samples from channel 3 and channel 9 are read and compared, and the larger of the two samples is transmitted. During the channel 9 time slot, the operation is repeated, with the largest of the channel 3 and 5 samples being transmitted."

U.S. patent 3,984,643 dated October 5, 1976 to S. A Inrig and A. S. J. Chapman describes a conferencing system in which, for an n-party conference, the PCM words for each of the n channels involved are linearized and then summed. The PCM word (linearized) from a particular conferee is then subtracted from the sum, and that result (i.e. the sum of n-1 conferees) is then converted back to PCM and sent to that particular conferee (see column 4, lines 7 to 30 of the patent).

The above three patents are similar in that the conferencing function in all three is provided by routing all the digital (PCM) signals to common equipment at one common location (e.g. at a telephone switching office). This need for routing all the PCM signals to common equipment at a common location can present problems when it is necessary to provide extension service capability for a large number of subscribers.

European patent application 0,023,403 by L. Herschtal relates to a digital telephone system wherein a number of digital telephones share a common loop i.e. a parallel instrument arrangement. The application recognises the problem of providing for parallel telephone operation i.e. extension service when digital telephones and a digital loop are employed. The solution, according to the application, is to provide a system in which it is possible to allow a number of users to listen to the incoming speech, but only one of the parallel connected telephones can transmit speech. The first of the parallel telephones to go off-hook will have access to the loop in the transmit direction. The extension telephones can only hear the off-premises party, they can not hear one another, and, except for the first telephone to go off-hook, they cannot transmit.

Advantageously the present invention provides a digital telephone set capable of being operated in parallel (e.g. as an extension or as a party line connection) on a subscriber's digital loop without the need of routing all the PCM signals to common equipment. This paralleling function operates without the need for additional timeslots, and in the preferred embodiment, without the need for additional transmission paths.

The present invention works as follows, using a two telephone set extension connection as an exemplary embodiment. The subscriber's digital telephone loop comprises one receive bus and one transmit bus (or alternately, separate receive and transmit channels on a single bi-directional bus). Both telephone sets are responsive to the digital signals appearing on the receive bus; a digital to analogue converter in each telephone set transforms the digital signal on the receive bus to an analogue signal. Each telephone set has two connections to the transmit bus; each connection being controlled by an on-off switch such that only one connection (per telephone set) to the transmit bus is possible, at any one time.

One of the two telephone sets, at any given time, is active and is capable of transmitting on the transmit bus (via its second on-off switch that is "on", or "closed"). The other telephone set is passive and cannot transmit on the transmit bus at that time (since its second on-off switch is open and has that path disconnected) but rather sums the signal received on the transmit bus (via its first on-off switch which is closed) with the signal received on the receive bus (in either an analogue form or in a linearised digital form after each signal has been converted from the compressed PCM format). Control equipment, situated within each telephone set, functions, in co-operation with the switching office (from which the loop originates and sometimes referred to as "common equipment") to control which set will be the active set and which will be the passive set; this control equipment will be explained later in greater detail. Note that only one set at any one time can be the active set, while one or more sets can be the passive set at any one time. Note also that each telephone set is capable of receiving signals from the receive bus while it is off-hook but only one set, at any given time, can send signals to the transmit bus.

According to the present invention there is provided a digital station apparatus for connection to a telephone subscriber's digital loop, having at least a first receive channel for information and a second receive channel for signalling from common equipment, and having at least a first transmit channel for information and a second transmit channel for signalling to the common equipment, the apparatus characterised by means for allowing the operation of two or more apparatus, in parallel, on the digital loop such that no more than said first and second receive channels and no more than said first and second transmit channels are employed whereby, at any given instant in time, only one of said station apparatus can both transmit on said first transmit channel and receive on said first receive channel whereby the remaining said station apparatus can receive from both said first transmit channel and said first receive channel.

According to the present invention there is also provided a digital telephone multi-set system for connection to a subscriber's digital telephone loop, having both receive channels and transmit channels, the system comprising: at least two digital telephone apparatus for connection to said telephone loop; one digital telephone apparatus being active for producing a transmit signal on at least a first channel of the transmit channels and for receiving a receive signal from at least a first channel of the receive channels; the remaining digital telephone apparatus being passive for receiving both the transmit signal from the first channel of the transmit channels, and the receive signal from the first channel of the receive channels; and all the telephone apparatus including control means for altering the operation of the telephone apparatus so that any one of the telephone apparatus can function as the active digital telephone apparatus and the remaining digital telephone apparatus can function as the passive digital telephone apparatus.

According to the present invention there is provided a method of controlling each of a plurality of telephone apparatus connected to a subscriber's digital telephone loop, having both receive channels and transmit channels, the method, at each apparatus, comprising the steps of; receiving digital signals from the receive channels; selectively passing first digital signals from a first channel of the transmit channels to the apparatus; selectively passing second digital signals from the apparatus to the first channel of the transmit channels; selectively comparing the first digital signals and the second digital signals and producing a signal indicative of the comparison.

According to the present invention there is also provided a method of controlling a plurality of telephone apparatus connected to a subscriber's digital telephone loop, having both a receive bus and a transmit bus, and wherein at any given time, one apparatus at most is active and the remainder of the apparatus are passive, the method comprising the steps of; receiving digital signals from the receive bus at each telephone apparatus; passing digital signals from a first channel of the transmit bus to all the passive apparatus; passing digital signals produced by the active apparatus to the first channel of the transmit bus; comparing, at each passive apparatus, the digital signals from the first channel of the transmit bus and digital signals produced by that particular passive apparatus, and selectively transmitting a digital signal on a second channel of the transmit bus indicating the result of the comparison.

The invention will now be described in more detail with reference to the accompanying drawings, wherein like parts in each of the several figures are identified by the same reference character, and wherein:

Figure 1 is a simplified block diagram depicting three telephone sets, constructed according to the present invention, connected to a single subscriber's digital loop;

Figure 2 is a simplified block diagram depicting the circuitry of the telephone sets of Figure 1;

Figure 3 is a simplified block diagram depicting the circuitry of the comparison circuit in Figure 2;

Figure 4 is a simplified block diagram of the modifier circuit in Figure 3;

Figure 5 is a simplified block diagram depicting the circuitry of the address and message receiver-decoder of Figure 2;

Figure 6 is a simplified block diagram depicting the circuitry of the talk-listen state controller in Figure 2;

Figure 7 is a simplified block diagram depicting the circuitry of the addess and message selector-sender of Figure 2;

Figure 8 is a timing diagram showing various clock signals;

Figure 9 is a timing diagram depicting various signals useful for a better understanding of the invention;

Figure 10 is a flow chart depicting the additional functions that are performed by switching office 11 in Figure 1;

Figure 11 is a chart depicting the states of signals and flip-flops in Figure 6.

Detailed Description

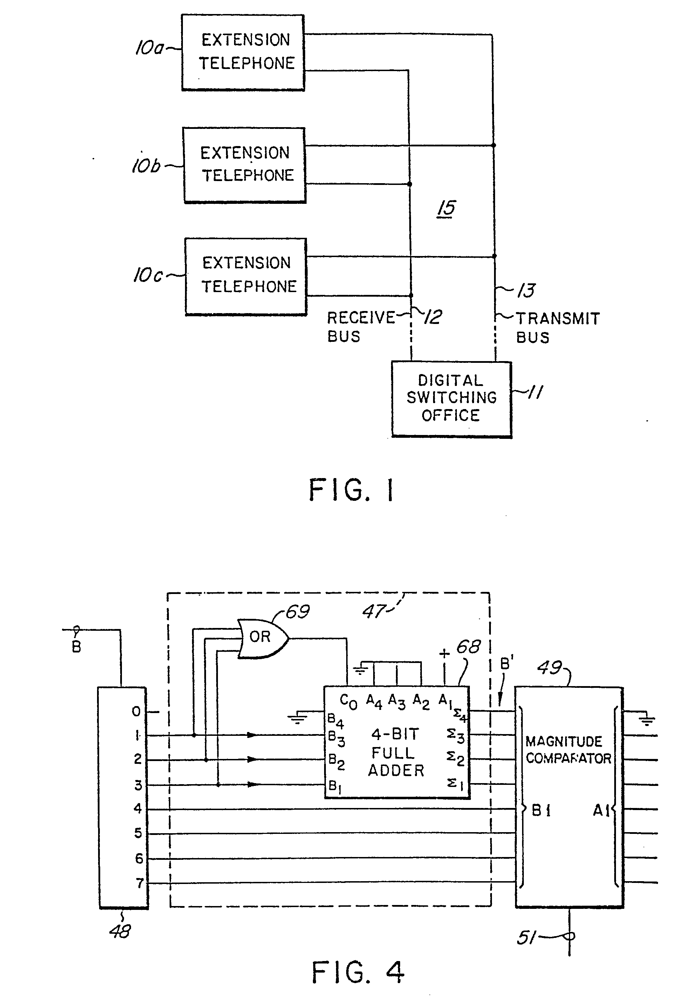

Figure 1 depicts telephone sets 10a, 10b, and 10c (referred to collectively as telephone sets 10) constructed according to the present invention and connected in parallel across a subscriber's digital loop referenced by the numeral 15. Digital loop 15 comprises receive TDM (Time Division Multiplex) bus 12 and transmit TDM bus 13, connected to digital switching office 11 (e.g. a Northen Telecom Trademark DMS-100®), also referred to as common equipment.

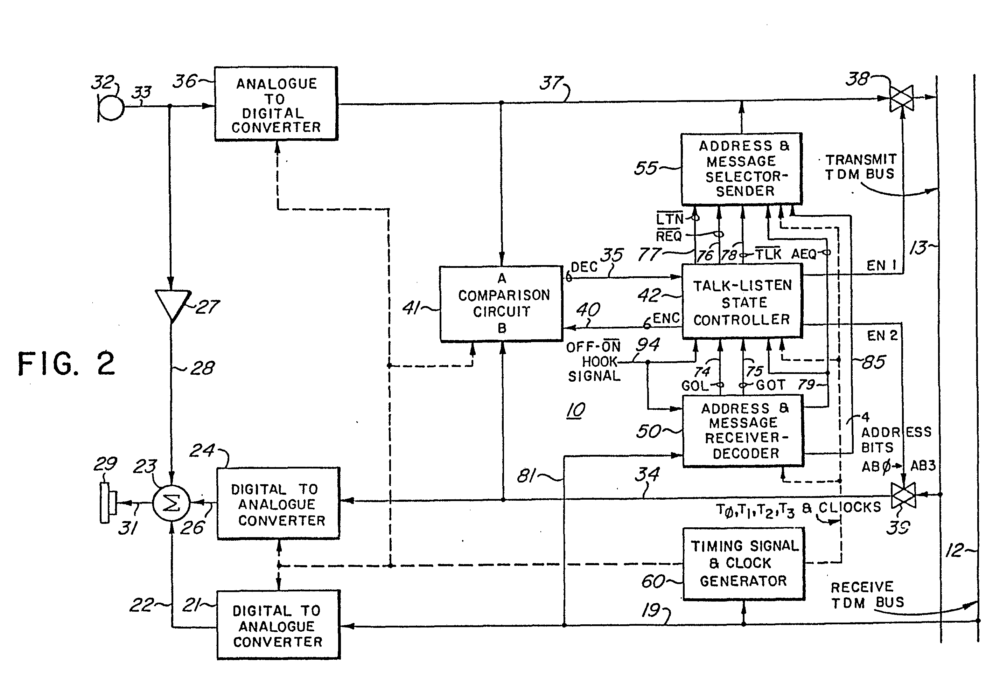

Figure 2 depicts the circuitry, in block form, of one telephone set 10. Note that the dialling circuitry has been eliminated from Figure 2 in order to simplify the description of the invention and in order to keep the drawings uncluttered. The dialling circuitry is well known in the art and is not part of the present invention.

Telephone set 10 receives digital signals on line 19, from receive bus 12; these digital signals include both voice information encoded as pulse. code modulation (PCM) and signals for control and signalling purposes. Digital to analogue converter 21 is responsive to the appropriate PCM signals and produces an analogue output on line 22. The analogue signal on line 22 is applied to summing circuit 23 as are the output signals from digital to analogue converter 24 on line 26, and the output from operational amplifier 27 on line 28. The output of summing circuit 23 is applied to headphone 29 via line 31.

The purpose of amplifier 27 is to provide "sidetone". It does this by passing a small portion of the output signal from microphone 32, on line 33, to summing circuit 23. The purpose of digital to analogue converter 21 is, as previously mentioned, to convert the appropriate digital signals appearing on receive TDM bus 12 into analogue signals on line 22. Note that the digital signals on receive bus 12 are solely from digital switching office 11, Figure 1 (and not from the other telephone sets 10). The purpose of digital to analogue converter 24 is to convert the digital signals appearing on line 34 into analogue signals on line 26 (this will be more completely described later). Summing circuit 23, of course, sums algebraically the signals on its three inputs (namely on lines 22, 26 and 28) and applies the resultant sum to headphone 29 via line 31.

Telephone set 10 produces a signal on transmit bus 13. Analogue to digital converter 36 receives analogue signals from microphone 32, via line 33, and transforms them into digital PCM signals on line 37. Switch 38, when closed, permits the signal on line 37 to be passed to transmit bus 13. Note that switch 39 is open, in telephone set 10 (when switch 38 is closed), so that signals from transmit bus 13 are not passed to line 34. Note also that switches 38 and 39 function such that when one is open the other is closed.

Talk-listen state controller 42 determines whether or not telephone set 10 is to "talk" (i.e. to be active) or to "listen" (i.e. to be passive). Note that all sets 10 will receive signals from receive TDM bus 12 all the time (i.e. signals received from switching office 11) and the "listening" mentioned above refers to listening to other telephone sets 10 on loop 15.

Stated in simplistic terms, state controller 42 is responsive both to signals from comparison circuit 41 and from address and message receiver-decoder 50. The function of receiver-decoder 50 is to receive control signals (time domain multiplexed with the PCM signals on bus 12) from switching office 11 (Figure 1). These command signals consist of the usual commands common in digital telephony (e.g. ringing signals, timeslot assignment, etc.) and also include two special signals for this application. The first special signal (GOL, on line 74) indicates that another telephone set 10 is requesting to enter the active mode and the subject telephone set 10 is being ordered into the passive mode, and the second special signal (GOT, on line 75) is an acknowledgement signal ordering the subject set 10 to enter the active mode. As long as only one set 10 is "off-hook", it is enabled in the active mode by switching office 11. Note that the convention used throughout this specification is that a signal with a line over it (e.g. $\overline{REQ}$) indicates that the signal is "low" (i.e. logic 0) when true and "high" (i.e. logic 1) when false. A signal without a line over it is "high" (i.e. logic 1) when true and "low" (i.e. logic 0) when false.

When telephone set 10 is in the passive mode (i.e. "listening" only), comparison circuit 41 monitors the magnitude of the PCM signals appearing on its A and B inputs. The PCM signals appearing at the A input of comparison circuit 41 are PCM signals that originated from microphone 32. The PCM signals appearing at the B input of comparison circuit 41 are PCM signals received from transmit TDM bus 13, when switch 39 is closed. Note that the PCM signals appearing on bus 13 are signals from the telephone sets 10 connected to loop 15. Note also, that switches 38 and 39 are not both closed simultaneously; when switch 38 is open switch 39 is closed, and vice-versa.

Address and message selector-sender 55 functions to send command signals from telephone set 10 to switching office 11 (Figure 1), via line 37 and transmit TDM bus 13. These command signals consist of the usual commands common in digital telephony (e.g. "off-hook" or request for service, dialling codes, etc.) and also include three special signals for this application. The first special signal ($\overline{REQ}$, on line 76) indicates that the subject telephone set 10 is requesting to enter the active mode and the other telephone sets 10 on loop 15 are being ordered into the passive mode. The second special signal ($\overline{LTN}$, on

line 77) is a status signal, sent when the subject telephone set 10 is acknowledging that a command from switching office 11 to enter the passive mode was received and executed. The third special signal ($\overline{TLK}$, on line 78) is a status signal acknowledging GOT, and informing switching office 11 that the subject telephone set 10 is in the active mode.

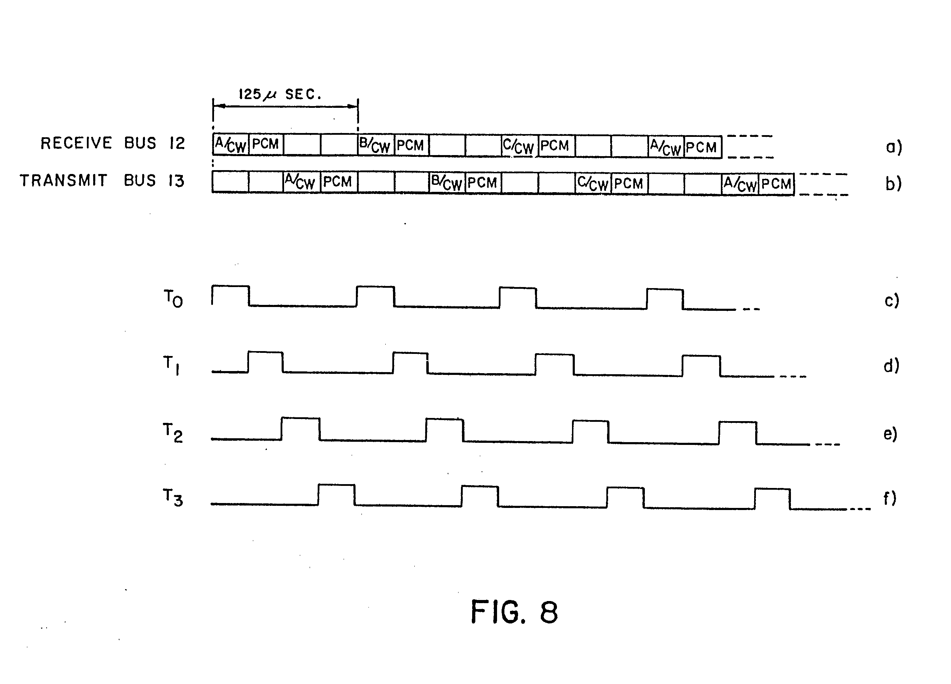

Timing signal and clock generator 60 produces the signals depicted in Figure 8. The reference timing for these signals is derived from the bit stream appearing on receive TDM bus 12, via line 19. As the generation of these signals is well known, the circuitry of generator 60 will not be described in greater detail.

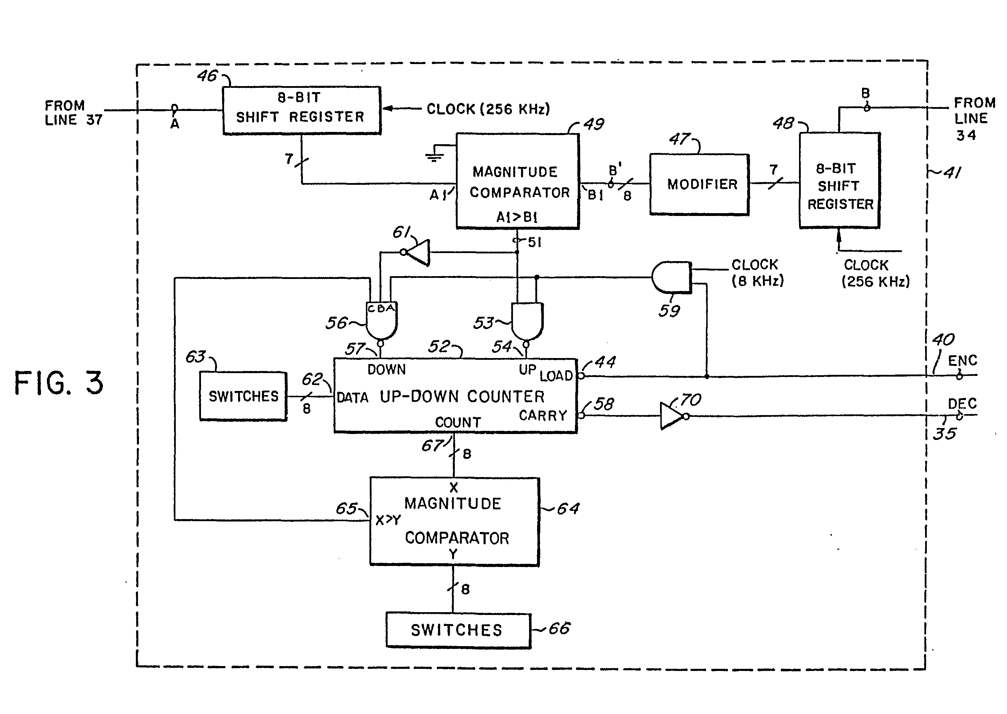

Looking at the circuitry of telephone set 10 in more detail, comparison circuit 41 is depicted in Figure 3, and the components thereof are interconnected as shown, and attention is directed thereto.

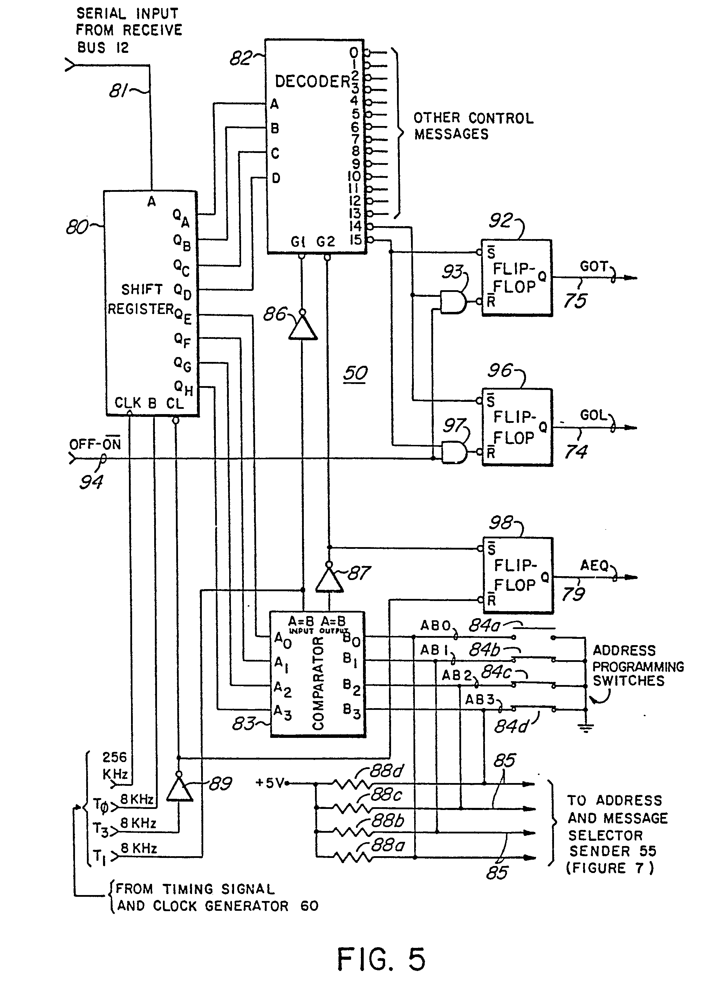

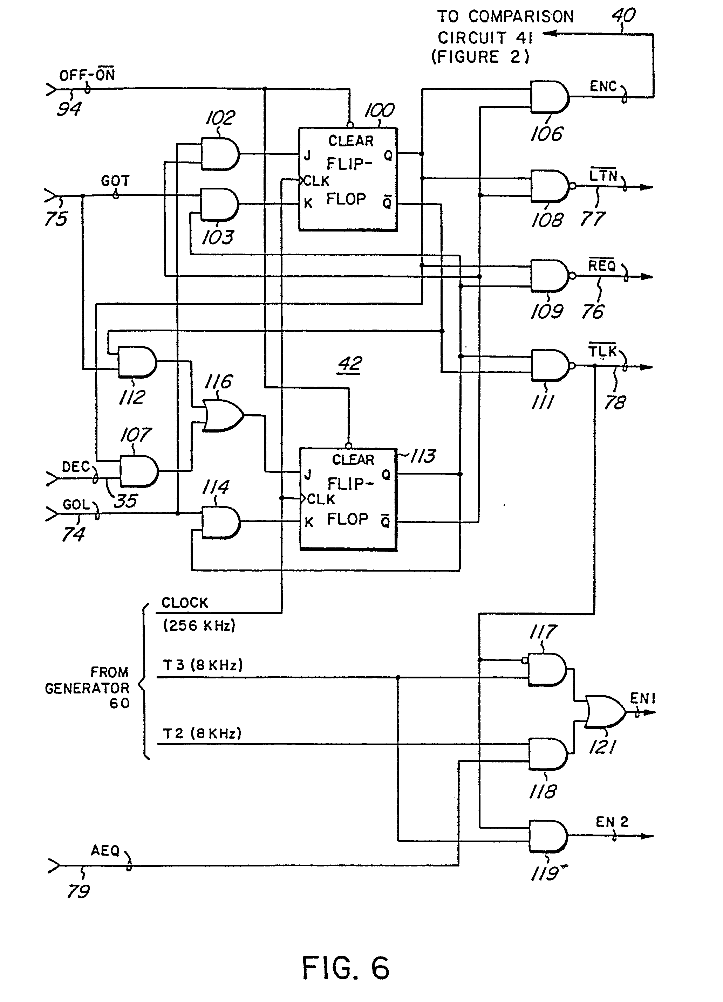

Eight-bit shift register 46 receives a serial input of digital signals (PCM signal A) from line 37 and outputs, in parallel format, seven digital bits to magnitude comparator 49 (note that the eighth or sign bit is not sent to comparator 49). Similarly, eight-bit shift register 48 receives a serial input of digital signals (PCM signal B) from transmit bus 13 (via switch 39, when closed), and outputs, in parallel format, seven digital bits to modifier 47; i.e. signal B less its sign bit. Modifier 47 functions to increase the value of signal B to produce an augmented signal B'. The details of modifier 47 are desired later, in conjunction with Figure 4. The output of modifier 47 is applied, in parallel format, to magnitude comparator 49.

Magnitude comparator 49 is comprised of two model 7485 comparators by Texas Intruments, connected so as to compare eight bits on one of its inputs (A1) with eight bits on its other input (B1). Note that the signal A, input to comparator 49, represents the magnitude bits of a PCM (pulse code modulation) signal; i.e. an 8-bit PCM word less the sign bit. The eighth bit of input A1 is supplied with a constant logic 0 signal. If $|A|$ is greater than $|B'|$, (i.e. A1>B1) then output signal 51 from comparator 49 is a logic 1; otherwise it is a logic 0.

Assume for the moment that A1>B1. Therefore output signal 51 from comparator 49 is a logic 1. Up-down counter 52 consists of two Texas Instruments SN74193 4-bit counters connected so as to provide an 8-bit counter, capable of counting to 255. NAND gate 53 feeds the count-up input 54 of counter 52 and NAND gate 56 feeds the count-down input 57 of the counter. Carry output 58 of counter 52 is a logic 1 (when no carry is present); this logic signal on output 58 is applied to inverter 70, the output of which is signal DEC (on line 35). A clock signal (8 KHz) is applied to one input of AND gate 59 and signal ENC (on line 40) is applied to the other input of gate 59. The result is an output signal from AND gate 59 that is the same as the clock signal when signal ENC is a logic 1, and is a logic 0 otherwise.

NAND gate 53 has a logic 1 (signal 51) on one of its inputs (when A1>B1) and has a logic signal (from AND gate 59) alternating between a logic 1 and a logic 0 on its other input. This results in a logic signal being applied to input 54 of counter 52 that alternates between a logic 1 and a logic 0. Inverter 61 produces a logic 0 signal to be applied to one input of NAND gate 56 and consequently the output of NAND gate 56 applied to down input 57 is a logic 1. Since down input 57 has a logic 1 and up input 54 has an input alternating between logic 1 and logic 0, counter 52 counts up. Data inputs 62 (of which there are eight) determines at which number up-down counter 52 begins counting; in the embodiment of Figure 2 they are fed with the value 127 in binary format (i.e., 128 down from the maximum count of 255). This function is performed by eight switches, indicated collectively as switches 63, which are each SPDT (single pole double throw) switches capable of connecting either to ground potential (i.e. logic 0) or to the positive potential (i.e. logic 1).

Up-down counter 52 is started by a logic 0 pulse appearing on load input 44 and being followed by a constant logic 1 state (i.e. signal ENC). Counter 52 then begins counting, commencing from the number applied to its data input 62. It counts up one for each transition from a logic 0 to a logic 1 applied to its up input 54 (as long as input 57 remains at a logic 1). When the maximum count is reached (i.e. 255) the carry output 58 produces a logic 0 which is sent to inverter 70.

Backtracking a little, assume that the maximum count has not yet been reached and the value of A and B' change such that A1≤B1. Then output signal 51 becomes a logic 0 and the output of NAND gate 53 applied to up input 54 is a constant logic 1. The output of NAND gate 56, applied to down input 57 alternates between logic 1 and logic 0, and consequently counter 52 counts down. Note that input A of NAND gate 56 is the clock signal, input B is the inverse of signal 51 (i.e. a logic 1 signal) and assuming X>Y, then input C is a logic 1 signal; consequently the output of NAND gate 56 alternates between logic 0 and logic 1 (and consequently counter 52 counts down).

Magnitude comparator 64 is used to ensure that counter 52 does not count down too far. A minimum count (i.e. 191, or 64 down from the maximum, in this embodiment) is applied to input Y of comparator 64 via eight SPDT switches referenced collectively as switches 66. The count from counter 52, taken from count output 67, is applied to input X of comparator 64. As long as the input on X is larger than the input of Y, (i.e. X>Y) the output on terminal 65 of comparator 64 will be a logic 1; otherwise it will be a logic 0. Consequently, when the input on X equals the input on Y, of comparator 64, output terminal 65 becomes a logic 0, the output of NAND gate 56 becomes a constant logic 1, and the down count stops. Once A1>B1, signal 51 once again becomes a logic 1, and the up count can recommence.

Figure 4 depicts modifier 47 of Figure 3, and its interconnection between shift register 48 and magnitude comparator 49. The devices are interconnected as shown in Figure 4 and attention is directed thereto. The most significant bit of the PCM word is the sign bit and is not used in the comparison; this bit is indicated as bit 0 in shift register 48. Modifier 47 is based upon a 4-bit full adder 68 (e.g. Texas Instrument SN7483A).

OR gate 69 receives on its three inputs, bits 1, 2, and 3 of the PCM word (which indicate the segment number of the PCM word). To provide a switching threshold, the absolute magnitude of signal B is incremented by either one or two segments before comparison with the absolute magnitude of signal A. Signal B is incremented by only one segment if its PCM magnitude falls in the first segment (i.e. bits 1, 2 and 3 are all logic 0's) and by two segments if its PCM value falls in any of the other seven segments (note that maximum amplitude is a PCM word with all logic 1's). Note also that for adder 68, A is the best significant bit of the A inputs, B is the least significant bit of the B inputs, and $\Sigma_1$ is the least significant bit of the $\Sigma$ outputs. Note also that the plus (+) input to A represents a logic 1, and the ground inputs to $B_4$, $A_2$, $A_3$, and $A_4$ represent a logic 0. As a first alternative for modifier 47, a suitably programmed ROM (Read Only Memory) addressed by the seven magnitude bits from register 48 could be employed. A second alternative is to omit modifier 47 altogether so that the absolute magnitudes of signals A and B are compared by comparator 49.

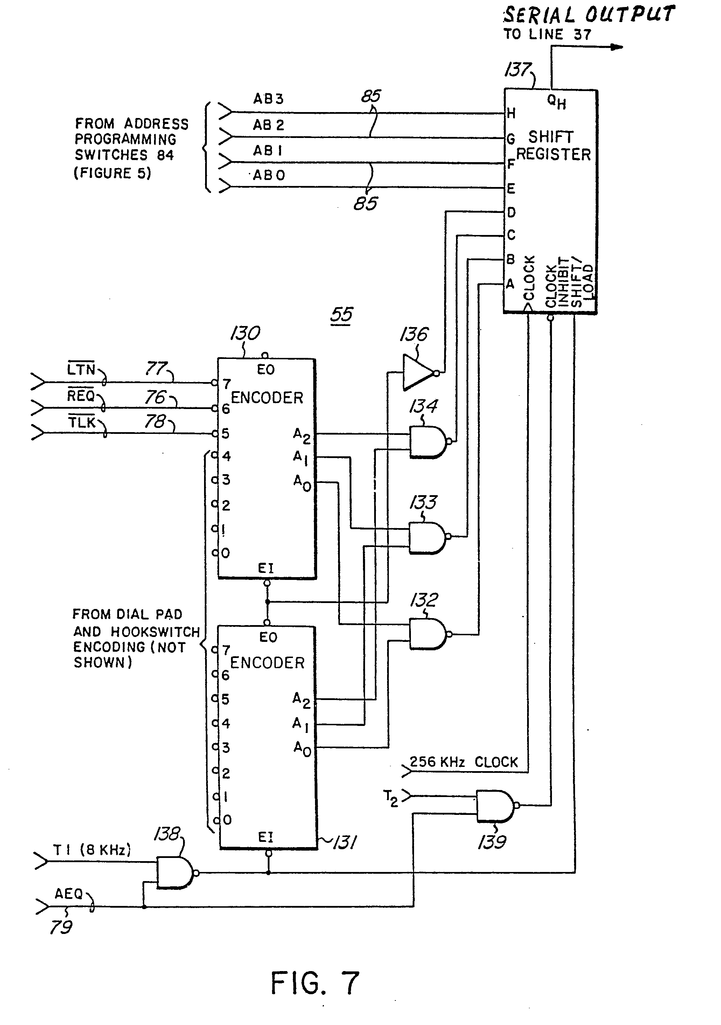

Figure 5 depicts, in simplified form, address and message receiver-decoder 50. Digital control signals from receive TDM bus 12 are received in serial fashion by shift register 80 (e.g. a T.I. SN74164) via line 81. Four bits from the 8-bit word are applied to decoder 82 (e.g. a T.I. SN74154). These four bits are the "message" or control bits and are decoded into one of sixteen mutually exclusive outputs when input terminals G1 and G2 are both at logic 0.

The remaining four bits stored in register 80 are the "address" bits and are applied to 4-bit magnitude comparator 83 (e.g. A T.I. SN7485). Address programming switches 84a, 84b, 84c, and 84d (referred to collectively as switches 84) determine the address for each individual telephone set 10. As shown in Figure 5, switches 84 are set to give the address 1000 (in binary format). If the address bits applied to input terminals A0, A1, A2, and A3 of comparator 83 are the same as the address bits AB0, AB1, AB2, and AB3 applied to input terminals B0, B1, B2, and B3, respectively of comparator 83, then the output terminal A=B is a logic 1 (if input terminal A=B is also a logic 1). This results in logic 0 being applied to input terminals G1 and G2 of decoder 82 via inverters 86 and 87 respectively, resulting in the activation (or enabling) of decoder 82. Resistors 88a, 88b, 88c, and 88d are referred to as "pull-up" resistors to provide a logic 1 (i.e. +5 volts) at terminals B0 to B3 of comparator 83 when a switch 84 is open, or to provide a logic 0 (i.e. 0

volts) at terminals B0 to B3 of comparator 83 when a switch 84 is closed. The address bits AB0, AB1, AB2, and AB3 are also applied to address and message selector-sender 55 (Figure 7) as indicated, via address bus 85.

Timing signal T3 is inverted by inverter 89. Timing signals T1 and T0 are applied as shown and a clock signal with a frequency of 256 kHz is applied to the clock input of shift register 80.

The first fourteen outputs (i.e. terminals 0 to 13 inclusive) of decoder 82 are control signals employed for purposes other than the extension service of the present invention (e.g. loop control commands such as timeslot assignment, loop back for maintenance purposes, etc.). For the present application, only two control signals, from terminals 14 and 15 of decoder 82 are employed. These two signals from decoder 82 (from terminals 14 and 15) are applied to $\overline{S-R}$ latch 92; note that the signal from terminal 14 is applied via AND gate 93, the other input of which is an OFF-$\overline{ON}$ signal 94 (which is a logic 1 signal for off-hook and a logic 0 signal for on-hook). The output of latch 92 is the logic signal GOT which is a logic 1 for "Go into the Talking state" (i.e. become active) and a logic 0 otherwise.

Likewise, the same two signals from decoder 82 (from terminals 14 and 15) are applied to $\overline{S-R}$ latch 96; note that the signal from terminal 15 is applied via AND gate 97, the other input of which is OFF-$\overline{ON}$ signal 94. The output of latch 96 is the logic signal GOL which is a logic 1 for "Go into the Listening state" (i.e. become passive) and a logic 0 for don't go into the listening state (i.e. remain in the active state). Note that terminal 14 of decoder 82 goes to a logic 0 when a command is received, from switching office 11, to become "passive" and terminal 15 of decoder 82 goes to a logic 0 when a command is received, from switching office 11 to become "active". The command to become passive (on terminal 14) sets latch 96 (i.e. produces GOL) and resets latch 92 if it was set. Similarly the command to become active (on terminal 15) sets latch 92 and resets latch 96. Both latches 96 and 92 are reset when telephone set 10 is returned to the "on-hook" state (i.e. off-$\overline{on}$ signal 94 is a logic 0).

Finally, two signals, one from the output of inverter 87 and one from the output of inverter 89 are applied to $\overline{S-R}$ latch 98. The output of latch 98 is the logic signal AEQ which is a logic 1 for "Adress equals set address" and a logic 0 for address doesn't equal set address.

Figure 6 depicts the circuitry, in simplified form, of Talk-listen state controller 42. The circuitry is interconnected as depicted in Figure 6 and attention is directed thereto. J-K flip-flop 100 (e.g. T.I. SN74LS73) is cleared by the OFF-$\overline{ON}$ signal 94 and is clocked by a 256 KHz clock signal applied to its clock input.

Similarly, J-K flip-flop 113 (e.g. T.I. SN74LS73) is cleared by the OFF-$\overline{ON}$ signal 94 and is clocked by a 256 KHz clock signal applied to its clock input.

To illustrate the operation of talk-listen state controller 42, assume for exemplary purposes that the telephone set 10 under consideration is off-hook (i.e. OFF-$\overline{ON}$ is a logic 1). Assume also that there is another telephone set 10 as an extension that is off-hook. The other signals are as follows: GOT is a logic 1; DEC is a logic 1; GOL is a logic 0; and AEQ is a logic 1.

When off-$\overline{on}$ signal 94 becomes a logic 1, flip-flops 100 and 113 are activated. Initially (when the Q output of both flip-flops 100 and 113 was logic 0), the logic signal ENC was a logic 0; $\overline{LTN}$ was a logic 1; $\overline{REQ}$ was a logic 1; and $\overline{TLK}$ was a logic 1. The output of OR gate 121 (i.e. EN1) was the same as waveform T2 and the output of AND gate 119 was the same as waveform $\overline{T3}$. Note that the input to gate 117 is either T1 or T3 depending upon the channel assignments; for the assignments indicated, the input to gate 117 is T3.

Because of the signals initially applied to them, the output of AND gates 102 and 103 were both logic 0 signals. This means that the signals now being applied to the J and K inputs of flip-flop 100 are logic 0's. This results in the Q output remaining at a logic 0 (as initially).

However, the logic signal that has been applied (all along) to the J input of flip-flop 113 is a logic 1 signal, and now has the clear input of flip-flop 113 is receiving a logic 1 signal, flip-flop 113 is activated and produces a logic 1 signal on its Q output (and consequently a logic 0 signal on its $\overline{Q}$ output). This has no effect on the signals ENC, $\overline{LTN}$ and $\overline{REQ}$, as they stay as they were at logic 0, 1 and 1 respectively. Signal $\overline{TLK}$ becomes a logic 0 since the two inputs to NAND gate 111 are both logic 1's. Signal EN1 becomes the combination of waveforms T2 and T3 and signal EN2 becomes a constant logic 0. The output of AND gate 103 becomes a logic 1 (applied to the K input of flip-flop 100) but this does not change the outputs of flip-flop 100.

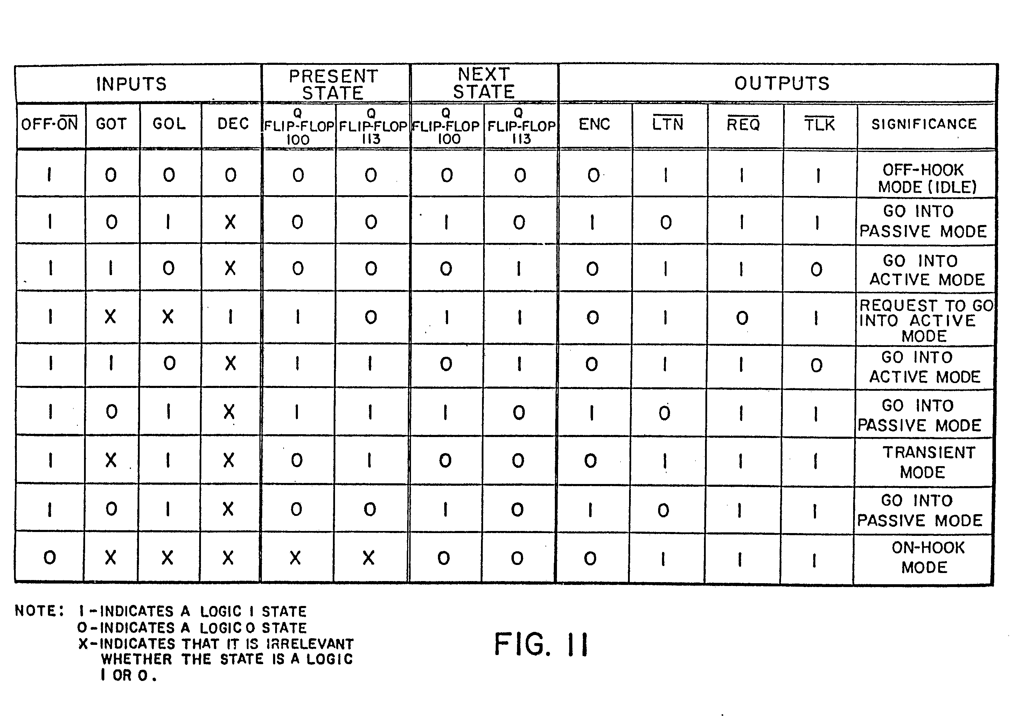

The operation of flip-flops 100 and 113 and associated signals can be summarized as shown in Figure 11.

Figure 7 depicts the circuitry of address and message selector-sender 55, in simplified form. Encoders 130 and 131 (e.g. T.I. SN74148) receive logic signals on their input terminals 0 to 7 that are encoded as a three bit binary signal on their output terminals A0, A1, and A2. Encoder 130 is responsive to the logic signals $\overline{LTN}$, $\overline{REQ}$, and $\overline{TLK}$ on its input terminals 7, 6, and 5, respectively. Encoder 130 is also responsive to (as is Encoder 131) the signals from the dial pad (not shown) and the hookswitch (not shown). The logic signals on the output terminals of Encoders 130 and 131 are combined by NAND gates 132, 133, and 134 and by inverter 136, as shown. The outputs of NAND gates 132, 133, and 134 along with the output of inverter 136 are applied to the A, B, C, and D inputs, respectively, of parallel-load eight-bit shift register 137 (i.e. a T.I. SN74165). The inputs E, F, G, and H of register 137 receive the address bits AB0, AB1, AB2 and AB3, respectively, from Figure 5. This information is outputted, in serial fashion, from output terminal QH of register 137. A 256 KHz clock signal is applied to the clock input of register 137.

Timing signal T1 along with logic signal AEQ (on line 79) are applied to NAND gate 138, the output of which is applied to the EI input of Encoder 131 and to the shift/load input of register 137. Timing signal T2 along with logic signal AEQ are applied to NAND gate 139, the output of which is applied to the clock inhibit terminal of register 137.

When AEQ is a logic 1 signal (i.e. address equals set address, the output of NAND gate 138 is the inverse of the timing signal T1 applied to its other input. Similarly, when AEQ is a logic 1 the output of NAND gate 139 is the inverse of the timing signal T2 applied to its other input. When AEQ is a logic 0 signal the output of both NAND gates 138 and 139 is a constant logic 1.

Figure 8 depicts the waveforms T0, T1, T2, and T3 along with the signals appearing on receive bus 12 and transmit bus 13. The signals appearing on receive bus 12 (Figure 8a) take the format of four timeslots that keep repeating. The first timeslot, in each group of four, contains a four bit address code indicated as A, B, or C (to address one of the extension telephones 10, in Figure 1) and a four bit control word, indicated as CW, to be acted upon by the addressed extension (this is referred to as signalling). The next timeslot contains a PCM word, indicated as PCM, sent from the switching office, that contains digitally encoded voice data (i.e. "information") to be received by all the extensions 10a, 10b, and 10c (Figure 1). The remaining two timeslots are not employed. This four timeslot cycle repeats itself, the only difference the second time being that the first timeslot now contains the address of a different extension (e.g. address B for extension telephone 10b). Likewise this four timeslot cycle is repeated a third time with the first timeslot now containing the address of the remaining extension (e.g. address C for extension telephone 10c). The fourth repetition of the four timeslot cycle commences once again with the address A (for extension telephone 10a) and the process repeats itself.

In effect what is happening on receive bus 12 is that each extension telephone 10a, 10b, and 10c is being "polled" (or instructed) by switching office 11 (Figure 1) in turn. The instructions sent to each extension 10 via the control word (CW) include the commands to go into or to remain in the listening mode (i.e. to be passive) or to go into or to remain in the talking mode (i.e. to be active). The information contained in the PCM signal represents digitally encoded voice signals and will of course be changing every 125 seconds.

The signals on transmit bus 13 (Figure 8b) follow the same format as those in Figure 8a except that the first two timeslots in each group of four timeslots are not used. The third timeslot in the group of four contains a four bit address, indicated as A, (generated by extension telephone 10a, to which that address belongs) and a four bit control word (CW) generated by that same extension telephone 10a (i.e. "signalling"). This control word CW conveys to the switching office information regarding whether or not that extension wishes to become active or information regarding the status of that extension, i.e. whether it is in the active or passive state, is on-hook or off-hook, etc. The fourth timeslot in the group contains an eight bit PCM word representing a digitally encoded voice signal (i.e. "information"). This PCM word emanates from the extension telephone 10 that is in the active mode, which may or may not have the address A (i.e. may or may not be telephone 10a). This four timeslot group is repeated a second time with extension telephone 10b (address B) replacing the extension with address A. Likewise the group is repeated a third time for address C (extension telephone 10c) and then repeats the complete cycle recommencing with address A. Note that if more digital station apparatus (i.e. telephone sets or data terminals) have access to the same bus, the polling cycle is extended. Using four binary address bits a total of sixteen terminals could be connected to a single bus. In this instance the terminals A, B, and C would be polled once every sixteen frames instead of once every three frames.

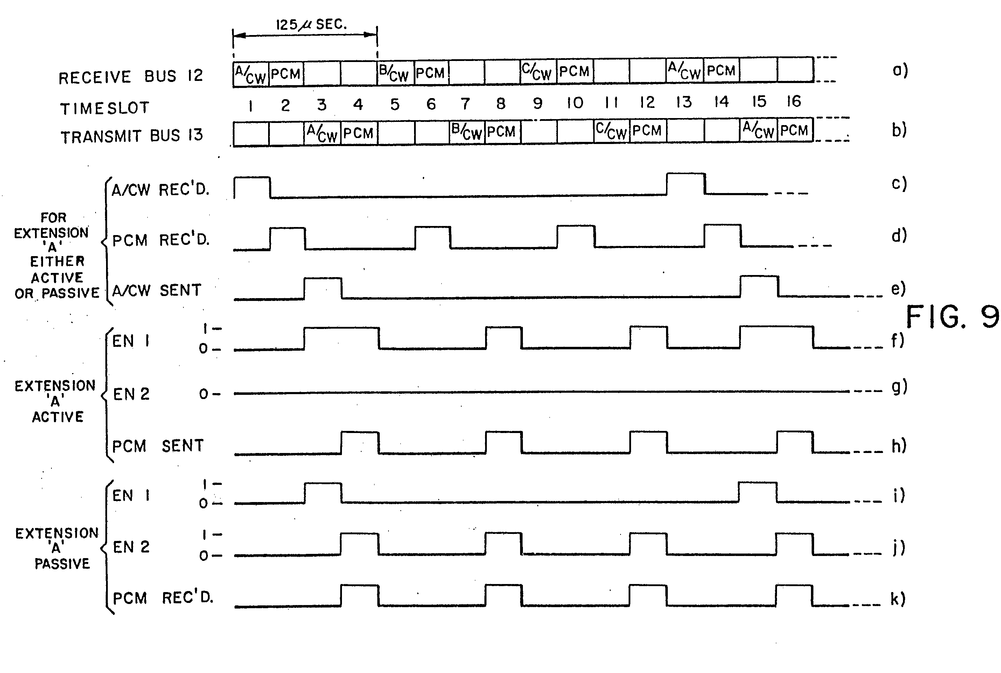

Figure 9 serves to illustrate more completely the timing of the signals. Figures 9a and 9b duplicate the receive bus 12 signals and transmit bus 13 signals of Figures 8a and 8b respectively. The timeslots on these two buses have been numbered 1 to 16 for ease of reference. Figure 9 depicts the signals of telephone set 10a (i.e. address A).

Figures 9c, 9d, and 9e depict the signals for address A that occur regardless of whether telephone set 10a is active or passive. In timeslot 1 the address A along with control word CW is received (from receive bus 12); this also happens in timeslot 13 (Figure 9c). In timeslot 2 a PCM word originating with switching office 11 (Figure 1) is received (from receive bus 12); this also happens in timeslots 6, 10, and 14. In timeslot 3, extension telephone A sends its address (i.e. A) and a control word (i.e. CW) to switching office 11 (Figure 1) on transmit bus 13; this is repeated in timeslot 15, with CW changed in accordance with the status of telephone A at that time.

Figures 9f, 9g, and 9h depict the signals for address A that occur when extension telephone 10a is active. Signal EN1 (recall that this signal controls the application of PCM signals from telephone extension 10 to transmit bus 13; i.e. it is a logic 1 when the extension is transmitting; see Figure 2) is a logic 1 during timeslots 3 and 4. This enables the address and control word as well as the PCM signal from extension telephone 10a to be transmitted. Signal EN1 is also a logic 1 during timeslots 8 and 12 to allow the PCM signal from telephone 10a to be transmitted via transmit bus 13. During timeslot 15 signal EN1 is once again a logic 1 to once more transmit the address A and control word CW from extension telephone 10a;

during timeslot 16 signal EN1 is a logic 1 to transmit the PCM signal.

Since telephone 10a is active, signal EN2 (Figure 9g) is at a continuous logic 0 level. This occurs so that telephone 10a does not receive its own signals from transmit bus 13. Figure 9h depicts the time periods that PCM information from extension telephone 10a is sent on transmit bus 13; namely timeslots 4, 8, 12, and 16.

Figures 9i, 9j, and 9k depict the signals for address A that occur when extension telephone 10a is passive. Signal EN1 (Figure 9i) is a logic 1 signal only during timeslots 3 and 15. That is, only when extension telephone 10a is transmitting its address A and control word CW to switching office 11 (Figure 1) via transmit bus 13, is EN1 and a logic 1. Signal EN2 is a logic 1 signal during timeslots 4, 8, 12, and 16. That is, every time there is a PCM signal on transmit bus 13, from one of the other extension telephones 10, signal EN2 goes to a logic 1 level to enable extension telephone 10a to receive the PCM signals transmitted by another extension telephone 10. Figure 9K depicts the timing of the PCM signals received from the other telephone extensions 10; this is of course the same waveform as signal EN2 of Figure 9j.

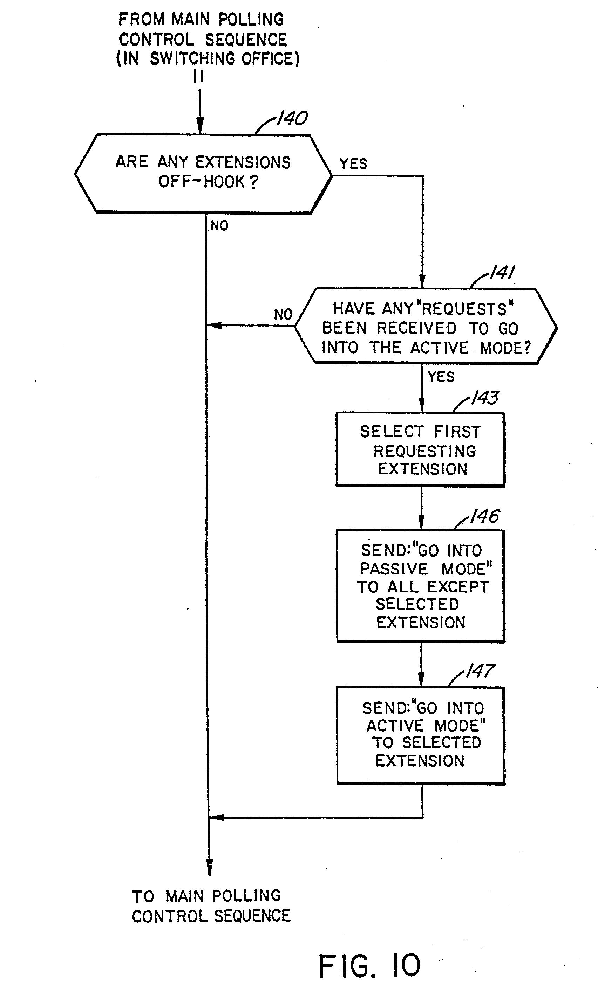

Figure 10 is a flow chart depicting the additional functions that must be performed by switching office 11 (Figure 1). Decision block 140 queries whether or not any extensions (i.e. telephone sets 10a, 10b, or 10c) are off-hook. If the answer is no, then the main polling control sequence, as is usually performed by switching office 11 is followed.

If the answer from decision block 140 is yes, then decision block 141 is accessed. Decision block 141 queries whether or not there is a request, to enter the active mode, pending from any extension telephone sets 10. If the answer for block 141 is no, then the main polling control sequence is re-entered directly.

If the answer from block 141 is yes, then block 143 is accessed to select the first requesting extension to go into the active mode; then action block 146 is accessed.

Action block 146 instigates the sending of the message to go into the passive mode to all extension telephones 10 except that extension telephone 10 that has been "selected".

Then action block 147 is accessed. Block 147 sends the message to go into the active mode to the "selected" extension telephone 10. The main polling control sequence is then re-entered.

**Claims**

1. A digital station apparatus (10) for connection to a telephone subscriber's digital loop (12, 13), having at least a first receive channel for information and a second receive channel for signalling from common equipment (11), and having at least a first transmit channel for information and a second transmit channel for signalling to the common equipment (11), said apparatus characterized by:

means for allowing the operation of two or more said apparatus, in parallel, on said digital loop such that no more than said first and second receive channels and no more than said first and second transmit channels are employed whereby, at any given instant in time, only one said station apparatus can both transmit on said first transmit channel and receive on said first receive channel while the remaining said station apparatus can receive from both said first transmit channel and said first receive channel.

2. The digital station apparatus of claim 1 wherein said apparatus is a telephone set.

3. The digital station apparatus (10) of claim 1 further characterized by:

terminal means (19) for receiving digital signals from said receive channels (bus 12);

first switch means (39) for selectively passing first digital signals (line 34) from a first channel of said transmit channels (bus 13);

second switch means (38) for selectively passing second digital signals (line 37) to said first channel of said transmit channels such that said first and second switch means operate in unison and one said switch means is open when the other said switch means is closed; and

a comparison means (41) for comparing said first digital signals (line 34) and said second digital signals (line 37), when said first switch means (39) is closed, and for producing a signal (DEC) indicative of said comparison.

4. The digital station apparatus of claim 3 wherein said comparison means (41) is responsive both to the absolute magnitude of the first digital signals (line 34) and to the absolute magnitude of the second digital signals (line 37) and counts, in a first direction, the number of times that the absolute magnitude of said second digital signals exceeds the absolute magnitude of said first digital signals by predetermined amount and counts in a second direction, to a predetermined limit value, the number of times that it doesn't, producing an output signal indicative of the accumulative count reaching a predetermined limit value in said first direction.

5. The digital station apparatus of claim 3 further including:

receiver means (50) both for receiving and for decoding digital signals from a second channel of said receive channels (bus 12);

control means (42), responsive both to said comparison means (41) and to said receiver means (50), for controlling said first switch means (39) and said second switch means (38), for enabling said comparison means (41), and for producing an indication of the status of said apparatus;

sender means (55), responsive to said control means (42), for selectively applying a digital signal to a second channel of said transmit channels (bus 13), via said second switch means (38).

6. The digital station apparatus of claim 5 wherein said comparison means (41) is responsive both to the absolute magnitude of the first digital signals (line 34) and to the absolute magnitude of the second digital signals (line 37) and counts up the number of times that the absolute magnitude of said second digital signals exceeds the absolute magnitude of said first digital signals by a predetermined amount and counts down, to a predetermined minimum value, the number of times that it doesn't, said comparison means (41) producing an output signal indictive of the accumulative count reaching a predetermined maximum value.

7. The digital station apparatus of claim 3, 4, or 6 wherein said station apparatus (10) is a telephone set.

8. The digital station apparatus of claim 4, 5, or 6 further including a first digital to analogue converter means (21) selectively responsive to said digital signals from said receive channels (bus 12), and a second digital to analogue converter means (24) responsive to said first digital signals (line 34) from said first channel of said transmit channels (bus 13), and a summing means (23) for summing the output signals of said first and second converter means so as to produce a composite analogue signal.

9. The digital station apparatus (10) of claim 1 wherein said digital loop (12, 13) has a receive bus (12) and a transmit bus (13), said apparatus (10) further characterized by:

a first converter means (21) for selectively converting digital signals, on said receive bus (12), into a first analogue signal;

a second converter means (24) for selectively converting first digital signals (line 34), from a first channel of said transmit bus (13), into a second analogue signal;

a summing means (23) for summing the first and second analogue signals from said first and said second converter means so as to produce a composite analogue signal;

a third converter means (36) for converting a third analogue signal (line 33) into second digital signals (line 37) for selective application to said first channel of said transmit bus (13); and

a comparison means (41) for selectively comparing said first digital signals and said second digital signals and for producing a signal (DEC) indictive of said comparison.

10. The digital station apparatus (10) of claim 9 wherein said comparison means (41) is responsive to the absolute magnitudes of the first and second digital signals and counts up the number of times that the absolute magnitude of said second digital signals exceeds the absolute magnitude of said first digital signals by a predetermined amount and counts down, to a predetermined minimum value, the number of times that it doesn't, the comparison means (41) producing an output signal indicative of the accumulative count reaching a predetermined maximum value.

11. The digital station apparatus of claim 10 wherein said predetermined amount is zero.

12. The digital station apparatus of claim 10 wherein said predetermined amount represents approximately a ten decibel difference in equivalent analogue signal level.

13. A digital telephone multi-set system for connection to a subscriber's digital telephone loop (15), having both receive channels (bus 12) and transmit channels (bus 13), said system characterized by:

at least two digital telephone apparatus (10a, 10b) for connection to said telephone loop;

one said digital telephone apparatus (10a) selectively being active for producing a transmit signal on at least a first channel of said transmit channels (bus 13) and for receiving a receive signal from at least a first channel of said receive channels (bus 12);

the remaining digital telephone apparatus (10b) selectively being passive for receiving both said transmit signal from said first channel of said transmit channels (bus 13), and said receive signal from said first channel of said receive channels (bus 12); and

all said telephone apparatus (10a, 10b) including control means for altering the operation of said telephone apparatus (10a, 10b) so that any one of said telephone apparatus (10a, 10b) can function as the active digital telephone apparatus and the remaining digital telephone apparatus (10a, 10b) can function as the passive digital telephone apparatus.

14. The system of claim 13 wherein said receive channels and said transmit channels are time division multiplexed on a single pair of electrical conductors.

15. The system of claim 13 wherein said transmit channels comprise a transmit bus (13), said receive channels comprise a receive bus (12), and said transmit bus and said receive bus are each time division multiplex buses.

16. The system of claim 13, 14 or 15 further including a separate signalling path, distinct from said subscriber's digital telephone loop, interconnecting all said telephone apparatus.

17. The digital telephone multi-set system of claim 13, 14, or 15 wherein said digital telephone apparatus are digital telephone sets.

18. The digtial telephone multi-set system of claim 13, 14, or 15 wherein said digital telephone apparatus are digital telephone sets and are two in number.

19. The digital telephone multi-set system of claim 13, 14, or 15 wherein said digital telephone apparatus are digital telephone sets and are three in number.

20. The system of claim 13 wherein said telephone apparatus are telephone sets and each said telephone set comprises:

a first converter means (21) for selectively converting digital signals, on said first channel of said receive channels (bus 12), into a first analogue signal;

a second converter means (24) for selectively converting first digital signals (line 34), from said first channel of said transmit channels (bus 13), into a second analogue signal;

a summing means (23) for summing the first and second analogue signals from said first and second converter means so as to produce a composite analogue signal;

a third converter means (36) for converting a third analogue signal (line 33) into second digital signals (line 37) for selective application to said first channel of said transmit channels (bus 13); and

a comparison means (41) for selectively comparing said first digital signals and said second digital signals and for producing a signal (DEC) indicative of said comparison.

21. The system of claim 20 wherein said comparison means (41) is responsive to the absolute magnitudes of the first and second digital signals and counts up the number of times that the absolute magnitude of said second digital signals exceeds the absolute magnitude of said first digital signals by a predetermined amount and counts down, to a predetermined minimum value, the number of times that it doesn't producing an output signal indicative of the accumulative count reaching a predetermined maximum value.

22. The system of claim 21 wherein an additional communication link, for said system, comprises a second channel of said transmit channels and a second channel of said receive channels.

23. A method of controlling each of a plurality of telephone apparatus (10) connected to a subscriber's digital telephone loop (15), having both receive channels and transmit channels, said method, at each said apparatus, characterized by the steps of:

receiving digital signals from said receive channels;

selectively passing first digital signals (line 34) from a first channel of said transmit channels (bus 13) to said apparatus;

selectively passing second digital signals (line 37) from said apparatus (10) to said first channel of said transmit channels (bus 13);

selectively comparing said first digital signals and said second digital signals and producing a signal (DEC) indicative of said comparison.

24. The method of claim 23 further including the step of:

selectively passing a control signal, in response to said signal (DEC) indicative of said comparison, from said apparatus (10) to a second channel of said transmit channels (bus 13).

25. The method of claim 23 or 24 wherein the step of selectively comparing said first digital signals and said second digital signals comprises the steps of:

comparing the absolute magnitude of said first digital signals to the absolute magnitude of said second digital signals;

changing, in a first direction, the count of a counter each time that the absolute magnitude of said second digital signals exceeds the absolute magnitude of said first digital signals by a predetermined amount;

changing said count in a second direction, to a predetermined limit value, each time that it doesn't; and

producing an output signal indicative of the accumulative count reaching a predetermined limit value in said first direction.

26. A method of controlling a plurality of telephone apparatus connected to a subscriber's digital telephone loop, having both a receive bus (12) and a transmit bus (13), and wherein at any given time, one said apparatus at most is active and the remainder of said apparatus are passive, said method characterized by the steps of:

receiving digital signals from said receive bus (12) at each said telephone apparatus;

passing digital signals from a first channel of said transmit bus (13) to all the passive apparatus;

passing digital signals produced by the active apparatus to said first channel of said transmit bus (13);

comparing, at each said passive apparatus, said digital signals from said first channel of said transmit bus (13) and digital signals produced by that particular passive apparatus, and selectively transmitting a digital signal on a second channel of said transmit bus (13) indicating the result of said comparison.

27. The method of claim 26 wherein the step of comparing said digital signals from said first channel of said transmit bus (13) and digital signals produced by that particular passive apparatus comprises the steps of:

comparing the absolute magnitude of said digital signals from said first channel of said transmit bus (13) to the absolute magnitude of the digital signals (line 37) produced by that particular passive apparatus;

incrementing the count of a counter each time that the absolute magnitude of said digital signals produced by that particular passive apparatus exceeds, by a predetermined amount, the absolute magnitude of said digital signals from said first channel of said transmit bus;

decrementing said count each time that it doesn't but not beyond a predetermined minimum value; and

producing an output signal indictive of the accumulative count reaching a predetermined maximum value.

**Patentansprüche**

1. Digitale Stationsvorrichtung (10) zur Verbindung mit einer digitalen Teilnehmer-Fernsprechleitung (12, 13), mit mindestends einem ersten Empfangskanal für Information und einem zweiten Empfangskanal für Signalisierung von gemeinsamer Ausrüstung (11) und mit mindestens einem ersten Sendekanal für Information und einem zweiten Sendekanal zur Signalisierung zu der gemeinsamen Ausrüstung (11), wobei die Vorrichtung charakterisiert ist durch:

Mittel zum Zulassen des Parallelbetriebes von zwei oder mehreren Vorrichtungen an der digitalen Leitung so, daß nicht mehr als der erste und der zweite Empfangskanal und nicht mehr als der erste und zweite Sendekanal betrieben werden, wodurch zu jedem bestimmten Zeitpunkt nur eine der Stationsvorrichtungen sowohl über den ersten Sendekanal senden als auch an dem ersten Empfangskanal empfangen kann, während die verbleibenden Stationsvorrichtungen sowohl von dem ersten Sendekanal als auch von dem ersten Empfangskanal empfangen können.

2. Digitale Stationsvorrichtung nach Anspruch 1, wobei die Vorrichtung ein Telefongerät ist.

3. Digitale Stationsvorrichtung (10) nach Anspruch 1, weiter gekennzeichnet durch:

Terminal-Mittel (19) zum Empfang von Digitalsignalen von den Empfangskanälen (Bus 12);

erste Schaltmittel (39) zum selektiven Durchleiten erster Digitalsignale (Leitung 34) von einem ersten Kanal der Sendekanäle (Bus 13);

zweite Schaltmittel (38) zum selektiven Durchleiten zweiter Digitalsignale (Leitung 37) zu dem ersten Kanal der Sendekanäle so, daß die ersten und zweiten Schaltmittel gleichlaufend wirksam sind und eines der Schaltmittel offen ist, wenn das andere der Schaltmittel geschlossen ist; und

ein Vergleichsmittel (41) zum Vergleichen der ersten Digitalsignale (Leitung 34) mit den zweiten Digitalsignalen (Leitung 37), wenn das erste Schaltmittel (39) geschlossen ist, und zur Erzeugung eines das Vergleichsergebnis bezeichnenden Signals (DEC).

4. Digitale Stationsvorrichtung nach Anspruch 3, wobei das Vergleichsmittel (41) sowohl auf die absolute Größe der ersten Digitalsignale (Leitung 34) als auch auf die absolute Größe der zweiten Digitalsignale (Leitung 37) anspricht und in einer ersten Richtung zählt, wie oft die absolute Größe der zweiten Digitalsignale die absolute Größe der ersten Digitalsignale um einen vorbestimmten Betrag übertrifft und in einer zweiten Richtung bis zu einem vorbestimmten Grenzwert zählt, wie oft das nicht der Fall ist, wobei ein Ausgangssignal erzeugt wird, das das Erreichen eines Vorbestimmten Grenzwertes in der ersten Richtung durch das angesammelte Zählergebnis bezeichnet.

5. Digitale Stationsvorrichtung nach Anspruch 3, die ferner enthält:

Empfangsmittel (50) sowohl zum Empfangen als auch zum Dekodieren von Digitalsignalen von einem zweiten Kanal der Empfangskanäle (Bus 12);

Steuermittel (42), die sowohl auf das Vergleichsmittel (41) als auch auf die Empfangsmittel (50) zur Steuerung der ersten Schaltmittel (39) und der zweiten Schaltmittel (38) ansprechen, um das Vergleichsmittel freizugeben (41) und eine Anzeige des Zustandes der Vorrichtung zu erzeugen;

auf die Steuermittel (42) ansprechende Sendermittel (55) zur selektiven Aufprägung eines Digitalsignales auf einen zweiten Kanal der Sendekanäle (Bus 13) über die zweiten Schaltmittel (38).

6. Digitale Stationsvorrichtung nach Anspruch 5, bei der das Vergleichsmittel (41) sowohl auf die absolute Größe der ersten digitalen Signale (Leitung 34) als auch auf die absolute Größe der zweiten digitalen Signale (Leitung 37) anspricht und zählt, wie oft die absolute Größe der zweiten Digitalsignale die absolute Größe der ersten Digitalsignale um einen vorbestimmten Betrag übertrifft und bis zu einem vorbestimmten Minimalwert abzählt, so oft das nicht der Fall ist, wobei das Vergleichsmittel (41) ein Ausgangssignal erzeugt, das das Erreichen eines vorbestimmten Maximalwertes durch das angesammelte Zählergebnis bezeichnet.

7. Digitale Stationsvorrichtung nach Anspruch 3, 4 oder 6, wobei die Stationsvorrichtung (10) ein Telefongerät ist.

8. Digitale Stationsvorrichtung nach Anspruch 4, 5 oder 6, weiter enthaltend ein erstes Digital/Analog-Wandler-mittel (21), das selektiv auf die Digitalsignale von den Empfangskanälen (Bus 12) anspricht, und ein zweites Digital/Analog-Wandlermittel (24), das auf die ersten Digitalsignale (Leitung (34) von dem ersten Kanal der Sendekanäle (Bus 13) anspricht, und ein Summiermittel (23) zum Summieren der Ausgangssignale des ersten und des zweiten Wandlermittels, um so ein zusammengesetztes Analogsignal zu erzeugen.

9. Digitale Stationsvorrichtung (10) nach Anspruch 1, wobei die Digitalleitung (12, 13) einem Empfangsbus (12) und einen Sendebus (13) besitzt und die Vorrichtung (10) weiter gekennzeichnetist durch:

ein erstes Wandlermittel (21) zum selektiven Wandeln von Digitalsignalen an dem Empfangsbus (12) in ein erstes Analogsignal;

ein zweites Wandlermittel (24) zum selektiven Wandeln erster Digitalsignale (Leitung 34) von einem ersten Kanal des Sendebus (13) in ein zweites Analogsignal;

ein Summiermittel (23) zum Summieren des ersten und des zweiten Analogsignals von dem ersten bzw. zweiten Wandlermittel, um so ein zusammengesetztes Analogsignal zu erzeugen;

ein drittes Wandermittel (36) zum Wandeln eines dritten Analogsignals (Leitung 33) in zweite Digitalsignale (Leitung 37) zur selektiven Aufbringung auf den ersten Kanal des Sendebus (13); und

ein Vergleichsmittel (41) zum selektiven Vergleichen der ersten Digitalsignale und der zweiten Digitalsignale und zum Erzeugen eines das Vergleichsergebnis bezeichnenden Signals (DEC).

10. Digitale Stationsvorrichtung (10) nach Anspruch 9, bei der das Vergleichsmittel (41) auf die absoluten Größen der ersten bzw. zweiten Digitalsignale anspricht und aufwärts zählt, wie oft die absolute Größe der zweiten digitalen Signale die absolute Größe der ersten digitalen Signale um einen vorbestimmten Wert übersteigt, und bis zu einem vorbestimmten Minimalwert abzählt, wie oft das nicht der Fall ist, wobei das Vergleichsmittel (41) ein das Erreichen eines vorbestimmten Maximalwertes durch den angesammelten Zählwert bezeichnendes Ausgangssignal erzeugt.

11. Digitale Stationsvorrichtung nach Anspruch 10, bei der der vorbestimmte Wert Null ist.

12. Digitale Stationsvorrichtung nach Anspruch 10, bei der der vorbestimmte Wert annähernd einen Unterschied von zehn Dezibel Äquivalenz-Analogsignal-Pegel darstellt.

13. Ein digitales Mehrfachgerät-Fernspechsystem zur Verbindung mit einer digitalen Teilnemer-Fersprechleitung (15) mit sowohl Empfangskanälen (Bus 12) als auch Sendekanälen (Bus 13), wobei das System gekennzeichnet ist durch:

mindestens zwei digitale Telefonvorrichtungen (10a, 10b) zur Verbindung mit der Fernsprechleitung;

wobei eine der digitalen Fernsprechvorrichtung (10a) selektiv zur Erzeugung eines Sendesignals an mindestens einem ersten Kanal der Sendekanäle (Bus 13) und zum Empfangen eines Empfangssignals von mindestens einem ersten Kanal von den Empfangskanälen (Bus 12) aktiv ist;

die restlichen digitalen Fernsprechvorrichtungen (10b) selektiv zum Empfang sowohl des Sendesignals von dem ersten Kanal der Sendekanäle (Bus 13) und des Empfangssignals von dem ersten Kanal der Empfangskanäle (Bus 12) passiv sind; und

alle Fernsprechvorrichtung (10a, 10b) Steuermittel zum Ändern des Betriebs der Fernsprechvorrichtungen (10a, 10b) in der Weise enthalten, daß irgendeine der Fernsprechvorrichtungen (10a, 10b) als die aktive digitale Fernsprechvorrichtung und die restlichen digitalen Fernsprechvorrichtungen (10a, 10b) als die passive digitale Fernsprechvorrichtung (en) wirken könne.

14. System nach Anspruch 13, wobei die Empfangskanäle und die Sendekanäle an einem einzigen Paar elektrischer Leiter zweittelungs-multiplexiert sind.

15. System nach Anspruch 13, wobei die Sendekanäle einen Sendebus (13) umfassen, die Empfangskanäle einen Empfangsbus (12) umfassen und der Sendebus und der Empfangsbus jeweils Zeitteilungs-Multiplex-Buse sind.

16. System nach Anspruch 13, 14 oder 15, weiter enthaltend einen separaten Signalisierungsweg, der unterschiedlich zu der digitalen Fernsprech-Teilnemerleitung vorhanden ist und alle die Fernsprechvorrichtungen miteinander verbindet.

17. Digitals Mehrfachgerät-System nach Anspruch 13, 14 oder 15, bei dem die digitalen Fernsprechvorrichtungen digitale Fernsprechgeräte sind.

18. Digitales Fernsprech-Mehrfachgerät-System nach Anspruch 13, 14 oder 15, bei dem die digitalen Fernsprechvorrichtung digitale Fernsprechgeräte und in der Anzahl zwei vorhanden sind.

19. Digitales Fernsprech-Mehrfachgerät-System nach Anspruch 13, 14 oder 15, bei dem die Digtelen Fernsprechvorrichtungen digitale Fernsprechgeräte und in der Anzahl drei vorhanden sind.

20. System nach Anspruch 13, bei dem die Telefonvorrichtungen Telefongeräte sind und jedes Telefongerät umfaßt:

ein erstes Wandlermittel (21) zum selektiven Wandeln von Digitalsignalen an dem ersten Kanal der Empfangskanäle (Bus 12) in ein erstes Analogsignal;

ein zweites Wandlermittel (24) zum selektiven Wandeln erster Digitalsignale (Leitung 34) von dem ersten Kanal der Sendekanäle (Bus 13 in ein zweites Analogsignal;

ein Summierungsmittel (23) zum Summieren der ersten und zweiten Analogsignale von dem ersten und dem zweiten Wandlermittel zur Erzeugung eines zusammengesetzten Analogsignals;

ein drittes Wandlermittel (36) zum Wandeln eines dritten Analogsignals (Leitung 33) in zweite Digitalsignale (Leitung 37) zu selektiven Aufprägung auf den ersten Kanal der Sendekanäle (Bus 13); und

ein Vergleichsmittel (41) zum selektiven Vergleichen der ersten Digitalsignale und der zweiten Digitalsignale und zum Erzeugen eines das Vergleichsergebnis bezeichnenden Signals (DEC).

21. System nach Anspruch 20, bei dem das Vergleichsmittel (41) auf die absoluten Größen der ersten bzw. zweiten digitalen Signale anspricht und aufwärts zählt, wie oft die absolute Größe der zweiten digitalen Signale die absolute Größe der ersten digitalen Signale um eine vorbestimmte Größe übertrifft, und bis zu einem vorbestimmten Minimalwert abwärts zählt, wie oft das nicht der Fall ist, wobei ein das Erreichen eines vorbestimmten Maximalwertes durch das angesammelte Zählergebnis bezeichnendes Ausgangssignal erzeugt wird.

22. System nach Anspruch 21, wobei ein zusätzlicher Verbindungsanschluß für das System einen zweiten Kanal der Sendekanäle und einen zweiten Kanal der Empfangskanäle umfaßt.

23. Verfahren zum Steuern jeder aus einer Vielzahl von an einer digitalen Fernsprech-Teilnehmerleitung (15) mit sowohl Empfangskanälen wie auch Sendekanälen angeschlossenen Fernsprechvorrichtungen (10), wobei das Verfahren bei jeder Vorrichtung durch folgende Schritte gekennzeichnet ist:

Empfangen von Digitalsignalen von den Empfangskanäle;

selektives Durchleiten ersten digitaler Signale (Leitung 34) von einem ersten Kanal von den Sendekanälen (Bus 13) zu der Vorrichtung;

selektives Durchleiten zweiter digitaler Signale (Leigunt 37) von der Vorrichtung (10) zu dem ersten Kanal von den Sendekanälen (Bus 13);

selektives Vergleichen der ersten digitalen Signale mit den zweiten digitalen Signalen und Erzeugen eines das Vergleichsergebnis bezeichnenden Signales (DEC).

24. Verfahren nach Anspruch 23, weiter folgenden Schritt enthaltend:

selektives Durchleiten eines Steuersignales in Reaktion auf das das Vergleichsergebnis bezeichnende Signal (DEC) von den Vorrichtung (10) zu einem zweiten Kanal von den Sendekanälen (Bus 13).

25. Verfahren nach Anspruch 23 oder 24, bei dem der Schritt des selektiven Vergleichens der ersten Digitalsignale mit den zweiten Digitalsignalen folgende Schritte umfaßt:

Vergleichen der absoluten Größe der ersten Digitalsignale mit der absoluten Größe der zweiten Digitalsignale;

Ändern des Zählinhaltes eines Zählers in einer ersten Richtung jedesmal dann, wenn die absolute Größe der zweiten Digitalsignale die absolute Größe der ersten Digitalsignale um eine vorbestimmte Größe übertrifft;

Ändern des Zählinhaltes in einer zweiten Richtung bis zu einem vorbestimmten Grenzwert jedesmal dann, wenn das nicht der Fall ist; und

Erzeugen eines das Erreichen eines vorbestimmten Grenzwertes in einer ersten Richtung durch den aufgesammelten Zählwert bezeichnenden Ausgangssignales.

26. Verfahren zum Steuern einer Vielzahl von an einer digitalen Fernsprech-Teilnehmerleitung mit sowohl einem Empfangsbus (12) wie auch einem Sendebus (13) angeschlossenen Telefonvorrichtungen, und wobei bei irgendeinem bestimmten Zeitpunkt höchstens eine der Vorrichtungen aktiv und der Rest der Vorrichtungen passiv sind, gekennzeichnet durch folgende Schritte:

Empfangen digitaler Signale von den Empfangsbus (12) bei jeder der Fernsprechvorrichtungen;

Durchleiten digitaler Signale von einem ersten Kanal des Sendebus (13) zu allen passiven Vorrichtungen;

Durchleiten von durch die aktive Vorrichtunge erzeugten digitalen Signalen zu dem ersten Kanal des Sendebus (13);

Vergleichen bei jeder passiven Vorrichtungen der digitalen Signale von dem ersten Kanal des Sendebus (13) mit den durch dei betreffende passive Vorrichtung erzeugten digitalen Signale und wahlweises Aussenden ein das Ergebnis des Vergleichs bezeichnenden digitalen Signals an einem zweiten Kanal des Sendebus (13).

27. Verfahren nach Anspruch 26, wobei der Schritt des Vergleichens der digitalen Signale von dem ersten Kanal des Sendebus (13) mit den durch die betreffende passive Vorrichtung erzeugten digitalen Signalen folgende Schritte umfaßt:

Vergleichen der absoluten Größe der digitalen Signale von dem ersten Kanal des Sendebus (13) mit der absoluten Größe der durch die betreffende passive Vorrichtung erzeugten digitalen Signale (Leitung 37);

Erhöhen des Zählinhaltes eines Zählers jedesmal dann, wenn die absolute Größe der durch die betreffende passive Vorrichtung erzeugten digitalen Signale um eine vorbestimmte Größe die absolute Größe der digitalen Signale von dem ersten Kanal des Sendebus übersteigt;

Erniedrigen des Zählinhaltes jedesmal, wenn dies nicht der Fall ist, jedoch nicht über einen vorbestimmten Minimalwert hinaus; und

Erzeugen eines das Erreichen eines vorbestimmten Maximalwertes durch den angesammelten Zählinhalt bezeichnenden Ausgangssignals.

**Revendications**

1. Appareil numérique de station (10) destiné à être connecté à une boucle numérique d'abonné téléphonique (12, 13), ayant au moins un premier canal de réception d'informations et un second canal de réception de signalisations en provenance d'équipements communs (11), et ayant au moins un premier canal de transmission d'informations et un second canal de transmission de signalisations vers les équipements communs (11), ledit appareil étant caractérisé par:

des moyens permettant le fonctionnement en parallèle de deux ou plusieurs desdits appareils sur ladite boucle numérique de telle façon qu'au plus lesdits premier et second canaux de réception et qu'au plus lesdits premier et second canaux de transmission soient utilisés, de sorte qu'à tout instant seul ledit appareil de station puisse à la fois transmettre sur ledit premier canal de transmission et recevoir sur ledit premier canal de réception, alors que lesdits appareils de station restants peuvent recevoir à la fois sur ledit premier cannal de transmission et ledit premier canal de réception.

2. Appareil numérique de station selon la revendication 1, caractérisé en ce que ledit appareil est un poste téléphonique.

3. Appareil numérique de station (10) selon la revendication 1, caractérisé en outre par:

un moyen terminal (19) pour recevoir des signaux numériques sur lesdits canaux de réception (bus 12);

un premier moyen de commutation (39) pour laisser passer sélectivement des premiers signaux numériques (ligne 34) en provenance d'un premier canal desdits canaux de transmission (bus 13);

un second moyen de commutation (38) pour laisser passer sélectivement des seconds signaux numériques (ligne 37) vers ledit premier canal desdits canaux de transmission, de telle façon que lesdits premier et second moyens de commutation fonctionnent en concordance et que l'un desdits moyens de commutation soit ouvert lorsque l'autre desdits moyens de commutation est fermé; et

un moyen comparateur (41) pour comparer lesdits premiers signaux numériques (ligne 34) et lesdits seconds signaux numériques (ligne 37), lorsque ledit premier moyen de commutation (39) est fermé, et pour produire un signal (DEC) représentatif de ladite comparaison.

4. Appareil numérique de station selon la revendication 3, caractérisé en ce que ledit moyen comparateur (41) répond à la fois à la valeur absolue des premiers signaux numériques (ligne 34) et à la valeur absolue des seconds signaux numériques (ligne 37) et compte, dans une premiere direction, le nombre de fois que la valeur absolue desdits seconds signaux numériques dépasse la valeur absolue desdits premiers signaux numériques d'une quantité prédéterminée et compte dans une seconde direction, jusqu'à une valeur limite prédéterminée, le nombre de fois que cela ne se produit pas, en produisant un signal de sortie représentatif d'un total cumulé atteignant une première valeur limite dans ladite première direction.

5. Appareil numérique de station selon la revendication 3, comprenant en outre:

un moyen récepteur (50) destiné à la fois à recevoir et à décoder des signaux numériques en provenance d'un second canal desdits canaux de réception (bus 12);

un moyen de commande (42), répondant à la fois audit moyen comparateur (41) et audit moyen récepteur (50), en commandant ledit premier moyen commutateur (39) et ledit second moyen commutateur (38), en validant ledit moyen comparateur (41), et en produisant une indication de l'état dudit appareil;

un moyen émetteur (55), répondant audit moyen de commande (42), en appliquant sélectivement un signal numérique à un second canal desdits canaux de transmission (bus 13), par l'intermédiaire dudit second moyen de commutation (38).

6. Appareil numérique de station selon la revendication 5, caractérisé en ce que ledit moyen comparateur (41) répond à la fois à la valeur absolue des premiers signaux numériques (ligne 34) et à la valeur absolue des seconds signaux numériques (ligne 37) et compte par incrémentations le nombre de fois de la valeur absolue desdits seconds signaux numériques d'une valeur prédéterminée et décompte, jusqu'à une valeur minimale prédéterminée, le nombre de fois que cela ne se produit pas, ledit moyen comparateur (41) produisant un signal de sortie représentatif du total cumulée atteignant une valeur maximale prédéterminée.

7. Appareil numérique de station selon la revendications 3, 4 ou 6, caractérisé en ce que ledit appareil de station (10) est un poste téléphonique.

8. Appareil numérique de station selon les revendication 4, 5 ou 6, caractérisé en ce qu'il comporte en outre un premier moyen convertisseur numérique/analogique (21) répondant sélectivement auxdits signaux numériques en provenance desdits canaux de réception (bus 12), et un second moyen convertisseur numérique/analogique (24) répondant auxdits premiers signaux numériques (ligne 34)

provenant dudit premier canal desdits canaux de transmission (bus 13), et un moyen sommateur (23) pour effectuer la somme des signaux de sortie desdits premier et second moyens convertisseurs de façon à produire un signal analogique composite.

9. Appareil numérique de station (10) selon la revendication 1, ladite boucle numérique (12, 13) ayant un bus de réception (12) et un bus de transmission (13), ledit appareil (10) étant en outre caractérisé par:

un premier moyen convertisseur (21) pour convertir sélectivement des signaux numériques, sur ledit bus de réception (12), en un premier signal analogique;

un second moyen convertisseur (24) pour convertir sélectivement des premiers signaux numériques (ligne 34) provenant d'un premier canal dudit bus de transmission (13), en un second signal analogique;

un moyen sommateur (23) pour effectuer la somme des premier et second signaux analogiques provenant dudit premier et dudit second moyen convertisseur, de façon à produire un signal analogique composite;

un troisième moyen convertisseur (36) pour convertir un troisième signal analogique (ligne 33) en seconds signaux numériques (ligne 37) destinés à être appliqués sélectivement audit premier canal dudit bus de transmission (13); et

un moyen comparateur (41) pour comparer sélectivement lesdits premiers signaux numériques et lesdits seconds signaux numériques et pour produire un signal (DEC) représentatif de ladite comparaison.

10. Appareil numérique de station (10) selon la revendication 9, caractérisé en ce que ledit moyen comparateur (41) répond aux valeurs absolues des premier et second signaux numériques et totalise le nombre de fois que la valeur absolue desdits seconds signaux numériques dépasse la valeur absolue desdits premiers signaux numériques d'une quantité prédéterminée et décompte, jusqu'à une valeur minimale prédéterminée, le nombre de fois que cela ne se produit pas, le moyen comparateur (41) produisant un signal de sortie représentatif du total cumulé atteignant une valeur maximale prédéterminée.

11. Appareil numérique de station selon la revendication 10, caractérisé en ce que ladite quantité prédéterminée est zéro.

12. Appareil numérique de station selon la revendication 10, caractérisé en ce que ladite quantité prédéterminée représente approximativement une différence de dix décibels dans le niveau du signal analogique équivalent.

13. Système téléphonique numérique multipostes destiné à être raccordé à une boucle téléphonique numérique d'abonné (15), ayant à la fois des canaux de réception (bus 12) et des canaux de transmission (bus 13), ledit système étant caractérisé par:

en ce qu'il comporte au moins deux appareils téléphoniques numériques (10a, 10b) destinés à être connectés à ladite boucle téléphonique;

en ce que l'un desdits appareils téléphoniques numériques (10a) est sélectivement actif pour produire un signal de transmission sur au moins un premier canal desdits canaux de transmission (bus 13) et pour recevoir un signal de réception sur au moins un premier canal desdits canaux de réception (bus 12);

en ce que les appareils téléphoniques numériques restants (10b) sont sélectivement passifs pour recevoir à la fois ledit signal de transmission sur ledit premier canal desdits canaux de transmission (bus 13), et ledit signal de réception sur ledit premier canal desdits canaux de réception (bus 12); et

en ce que tous lesdits appareils téléphoniques (10a, 10b) comportent un moyen de commande servant à modifier le fonctionnement desdits appareils téléphoniques (10a, 10b) de façon à ce que l'un quelconque desdits appareils téléphoniques (10a, 10b) puisse fonctionner en tant que l'appareil téléphonique numérique actif et en ce que l'appareil téléphonique numérique restant (10a, 10b) puisse fonctionner en tant que l'appareil téléphonique numérique passif.

14. Système selon la revendication 13, caractérisé en ce que lesdits canaux de réception et lesdits canaux de transmission sont multiplexés par répartition dans le temps sur une paire simple de conducteurs électriques.

15. Système selon la revendication 13, caractérisé en ce que lesdits canaux de transmission comprennent un bus de transmission (13), en ce que lesdits canaux de réception comprennent un bus de réception (12), et en ce que ledit bus de transmission et ledit bus de réception sont tous deux des bus à multiplexage par répartition dans le temps.

16. Système selon la revendication 13, 14 ou 15, caractérisé en outre en ce qu'il comporte une ligne de signalisation séparée, distincte de ladite boucle téléphonique numérique d'abonné, reliant tous lesdits appareils téléphoniques.

17. Système téléphonique numérique multipostes selon la revendication 13, 14, ou 15, caractérisé en ce que lesdits appareils téléphoniques numériques sont des postes téléphoniques numériques.

18. Système téléphonique numérique multipostes, selon la revendication 13, 14 ou 15, caractérisé en ce que lesdits appareils téléphoniques numériques sont des postes téléphoniques numériques et sont au nombre de deux.

19. Système téléphonique numérique multipostes selon la revendication 13, 14 ou 15, caractérisé en ce que lesdits appareils téléphoniques numériques sont des postes téléphoniques numériques et sont au nombre de trois.

20. Système selon la revendication 13, caractérisé en ce que lesdits appareils téléphoniques sont des postes téléphoniques et en ce que chacun desdits postes téléphoniques comprend:

un premier convertisseur (12) pour convertir sélectivement des signaux numériques, sur ledit premier canal desdits canaux de réception (bus 12), en un premier signal analogique;

un second moyen convertisseur (24) pour convertir sélectivement des premiers signaux numériques (ligne 34), provenant dudit premier canal desdits canaux de transmission (bus 13), en un second signal analogique;

un moyen sommateur (23) pour effectuer la somme des premier et second signaux analogiques provenant dudit premier et dudit second moyen convertisseur de façon à produire un signal analogique composite;

un troisième moyen convertisseur (36) pour convertir un troisième signal analogique (ligne 33) en des seconds signaux numériques (ligne 37) destinés à être sélectivement appliqués audit premier canal desdits canaux de transmission (bus 13); et

un moyen comparteur (41) pour comparer sélectivement lesdits premier signaux numériques et lesdits seconds signaux numériques et pour produire un signal (DEC) représentatif de ladite comparaison.

21. Système selon la revendication 20, caractérisé en ce que ledit moyen comparateur (41) répond aux valeurs absolues des premier et second signaux numériques et totalise le nombre de fois que la valeur absolue desdits seconds signaux numériques dépasse la valeur absolue desdits premier signaux numériques d'un quantité prédéterminée et décompte, jusqu'à une valeur minimale prédéterminée, le nombre de fois que cela ne se produit pas, en produisant un signal de sortie représentatif du total cumulé atteignant une valeur maximale prédéterminée.

22. Systeme selon la revendication 21, caractérisé en ce qu'une liaison de télécommunication supplémentaire, destinée audit système, comprend un second canal desdits canaux de transmission et un second canal desdits canaux de réception.

23. Procédé pour commander chacun d'un ensemble d'appareils téléphoniques (10) connectés à une boucle téléphonique numérique d'abonné (15), ayant à la fois des canaux de réception et des canaux de transmission, ledit procédé étant caractérisé en ce qu'il comporte les opérations consistant à:

recevoir des signaux numériques en provenance desdits canaux de réception;

laisser passer sélectivement des premiers signaux numériques (ligne 34) provenant d'un premier canal desdits canaux de transmission (bus 13) vers lesdits appels;

laisser passer sélectivement des seconds signaux numériques (ligne 37) provenant desdits appareils (10) vers ledit premier canal desdits canaux de transmission (bus 13);

sélectivement comparer lesdits premiers signaux numériques et lesdits seconds signaux numériques et produire un signal (DEC) représentatif de ladite comparaison.

24. Procédé selon la revendication 23, caractérisé en ce qu'il consiste en outre:

à laisser passer sélectivement un signal de commande, en réponse audit signal (DEC) représentatif de ladite comparaison, en provenance desdits appareils (10) vers un second canal desdits canaux de transmission (bus 13).

25. Procédé selon la revendication 23 ou 24, caractérisé en ce que l'opération de comparaison sélective desdits premiers signaux numériques et desdits seconds signaux numériques comporte les opérations consistant à:

comparer la valeur absolue desdits premiers signaux numériques à la valeur absolue desdits seconds signaux numériques;

modifier, dans une première direction, le total d'un compteur à chaque fois que la valeur absolue desdits seconds signaux numériques dépasse la valeur absolue desdits premiers signaux numériques d'une quantité prédéterminée;

modifier ledit total dans une seconde direction, jusqu'à une valeur limite prédéterminée, chaque fois que cela ne se produit pas; et

produire un signal de sortie représentatif du total cumulé atteignant une valeur limite prédéterminée dans ladite première direction.

26. Procédé pour commander un ensemble d'appareils téléphoniques connectés à une boucle téléphonique numérique d'abonné, ayant à la fois un bus de réception (12) et un bus de transmission (13), et dans lequel à un instant donné l'un desdits appareils au plus est actif et les autres desdits appareils sont passifs, ledit procédé étant caractérisé en ce qu'il comporte les opérations consistant à:

recevoir des signaux numériques en provenance dudit bus de réception (12) sur chacun desdits appareils téléphoniques;

faire passer des signaux numériques d'un premier canal dudit bus de transmission (13) vers tous les appareils passifs;

faire passer des signaux numériques produits par les appareils actifs vers ledit premier canal dudit bus de transmission (13);

comparer, au niveau de chacun desdits appareils passifs, lesdits signaux numériques provenant dudit premier canal dudit bus de transmission (13) et lesdits signaux numériques produits par l'appareil passif particulier et transmettre sélectivement un signal numérique sur un second canal dudit bus de transmission (13) représentatif du résultat de ladite comparaison.

27. Procédé selon la revendication 26, caractérisé en ce que l'opération de comparaison desdits signaux numériques provenant dudit premier canal dudit bus de transmission (13) et des signaux numériques produits par l'appareil passif particulier comprend les opérations consistant à:

comparer la valeur absolue desdits signaux numériques provenant dudit premier canal dudit bus de transmission (13) à la valeur absolue des signaux numériques (ligne 37) produits par l'appareil passif particulier;

incrémenter le total d'un compteur chaque fois que la valeur absolue desdits signaux numériques produits par l'appareil passif particulier dépasse, d'un quantité prédéterminée, la valeur absolue desdits signaux numériques provenant dudit premier canal dudit bus de transmission;

décrémenter ledit compteur chaque fois que cela ne se produit pas mais sans descendre en-dessous d'une valeur minimale prédéterminée; et

produire un signal de sortie représentatif du total cumulé atteignant une valeur maximale prédéterminée.

FIG. I

FIG. 4

FIG. 2

2

FIG. 3

FIG. 5

FIG. 6

**0 059 543**

FIG. 7

6

FIG. 8

FIG. 9

0 059 543

**0 059 543**

FROM MAIN POLLING
CONTROL SEQUENCE
(IN SWITCHING OFFICE)

ARE ANY EXTENSIONS OFF-HOOK ? — *140*

YES

NO

HAVE ANY "REQUESTS" BEEN RECEIVED TO GO INTO THE ACTIVE MODE? — *141*

NO

YES

SELECT FIRST REQUESTING EXTENSION — *143*

SEND: "GO INTO PASSIVE MODE" TO ALL EXCEPT SELECTED EXTENSION — *146*

SEND: "GO INTO ACTIVE MODE" TO SELECTED EXTENSION — *147*

TO MAIN POLLING
CONTROL SEQUENCE

FIG. 10

9

| INPUTS | | | | PRESENT STATE | | NEXT STATE | | OUTPUTS | | | | |
|---|---|---|---|---|---|---|---|---|---|---|---|---|
| OFF-$\overline{ON}$ | GOT | GOL | DEC | Q FLIP-FLOP 100 | Q FLIP-FLOP 113 | Q FLIP-FLOP 100 | Q FLIP-FLOP 113 | ENC | $\overline{LTN}$ | $\overline{REQ}$ | $\overline{TLK}$ | SIGNIFICANCE |
| 1 | 0 | 0 | 0 | 0 | 0 | 0 | 0 | 0 | 1 | 1 | 1 | OFF-HOOK MODE (IDLE) |
| 1 | 0 | 1 | X | 0 | 0 | 1 | 0 | 1 | 0 | 1 | 1 | GO INTO PASSIVE MODE |
| 1 | 1 | 0 | X | 0 | 0 | 0 | 1 | 0 | 1 | 1 | 0 | GO INTO ACTIVE MODE |
| 1 | X | X | 1 | 1 | 0 | 1 | 1 | 0 | 1 | 0 | 1 | REQUEST TO GO INTO ACTIVE MODE |
| 1 | 1 | 0 | X | 1 | 1 | 0 | 1 | 0 | 1 | 1 | 0 | GO INTO ACTIVE MODE |
| 1 | 0 | 1 | X | 1 | 1 | 1 | 0 | 1 | 0 | 1 | 1 | GO INTO PASSIVE MODE |
| 1 | X | 1 | X | 0 | 1 | 0 | 0 | 0 | 1 | 1 | 1 | TRANSIENT MODE |
| 1 | 0 | 1 | X | 0 | 0 | 1 | 0 | 1 | 0 | 1 | 1 | GO INTO PASSIVE MODE |
| 0 | X | X | X | X | X | 0 | 0 | 0 | 1 | 1 | 1 | ON-HOOK MODE |

NOTE: 1 – INDICATES A LOGIC 1 STATE
O – INDICATES A LOGIC O STATE
X – INDICATES THAT IT IS IRRELEVANT WHETHER THE STATE IS A LOGIC 1 OR 0.

FIG. 11

0 059 543